# EUROPEAN PATENT SPECIFICATION

(11) **EP 4 626 686 B1**
(45) Date of publication and mention of the grant of the patent: **03.12.2025**
(21) Application number: 24706236.7
(22) Date of filing: 01.02.2024
(51) Int. Cl.: B29C 73/10, B29C 73/12, F03D 80/50, F03D 1/06, B29C 35/08

(54) **A DEVICE FOR PATCHING WIND TURBINE BLADE SURFACE**
VORRICHTUNG ZUM PATCHEN DER OBERFLÄCHE EINER WINDTURBINENSCHAUFEL
DISPOSITIF DE CORRECTION DE SURFACE DE PALE D'ÉOLIENNE

(30) Priority: 13.02.2023 LV 230016; 24.10.2023 LV 230100
(43) Date of publication of application: 08.10.2025
(73) Proprietor: Aerones Engineering, SIA, 1073 Riga (LV)
(72) Inventor: PUTRAMS, Janis, 1019 Riga (LV)
(74) Representative: Fortuna, Jevgenijs
(86) International application number: PCT/LV2024/050003
(87) International publication number: WO 2024/172638

(56) References cited:
- EP-A1- 3 848 190
- CN-A- 113 977 995
- US-A1- 2015 314 540
- "Advances on mechanics, design engineering and manufacturing : proceedings of the International Joint Conference on Mechanics, Design Engineering & Advanced Manufacturing (JCM 2016), 14-16 September, 2016, Catania, Italy; IN: Lecture notes in mechanical engineering; ISSN 2195-4356", 1 January 2017 (2017-01-01), Cham, pages 321 - 328, XP093155647, ISSN: 2195-4356, ISBN: 978-3-319-45781-9, Retrieved from the Internet <URL:http://link.springer.com/content/pdf/10.1007/978-3-319-45781-9_33> [retrieved on 20240424], DOI: 10.1007/978-3-319-45781-9_33

## Description

### Field of the invention

The present invention relates to the wind turbines and wind turbine blades' maintenance devices, in particular, to the methods and devices for patching wind turbine blade surface.

### Background of the invention

Wind turbine blades are typically void structures generally made from glass or carbon fiber with laminate and sandwich structures. Generally, these turbines have three blades that are all connected to the single hub. Every blade also has one or more drainage holes which serves the purpose of letting out any condensate that has accumulated inside the blade. There can be one or several drainage holes near the tip of the blade as well as closer to the root of the blade.

Wind turbines have seen a lot of development as the need for green energy increases. Also, the size of the turbines has grown. Some turbine model blades have reached the length of more than hundred meters.

As these blades rotate it is important that all blades are balanced. Any imbalance would create vibration for the hub and the nacelle and could damage the tower, bearings, and blades themselves.

Sometimes it is necessary to alter a blade surface to introduce some structural modifications (e.g. counterbalancing, or reinforcement of a wind turbine blade), or to repair impact, fatigue, or erosion damage of a blade surface.

As wind turbine blades are designed for optimal aerodynamics and structural performance, altering a blade surface e.g. by introducing holes or creating non-even surface can influence its performance and longevity. Any roughness or protrusion can cause turbulence, reducing blade efficiency. An unprotected hole can allow moisture and other environmental contaminants to penetrate the blade, leading to further damage, such as delamination or internal corrosion. Also, a consistent and uniform appearance of wind turbines is important for stakeholders and regulatory bodies. Thus, proper patching and painting of these alterations are crucial to maintain the blade's integrity and performance. Any imperfection can lead to reduced efficiency.

Wind turbine blades are positioned at great heights. Traditionally wind turbine blade surface repair is performed using rope-access technicians. They would use either ropes or platforms to access the tip and perform the work. CN113977995A discloses an in-situ repair of a composite based on infrared pulsed laser cleaning and ultraviolet curing.

### Brief summary of the invention

The goal of the invention is to provide a robotic device for effective patching wind turbine blade surface.

The set goal is reached by a device for patching wind turbine blade surface comprising: a patching head, comprising: a frame enclosure open on one side. The frame enclosure having a patch placement area designed to be in the form of a UV-transparent membrane, configured to be substantially flat at least in its center and have a border that extends outward. The frame enclosure further comprising suction interface, configured to be applied to a surface of a wind turbine blade and to hold the frame enclosure in the place, in respect to the blade; a curtain with curtain holding arrangement. The curtain is designed to be UV-opaque and configured to be removably attached in front of the membrane, so to close the open side of the frame enclosure and to guard a patch from the ambient UV light exposure, when the patch is placed on the membrane. The curtain holding arrangement is configured to allow remotely controllable removal of the curtain, so to remove the UV protection from the patch placed on the membrane. The frame enclosure further comprising a UV light source located in the frame enclosure and configured to expose a patch placed on the patch placement area to the UV light. The device further comprises a pump system, connected to the suction interface of the patching head; a robotic arm, designed to grip and position the patching head, to exert substantially perpendicular pressure onto the blade surface via the frame enclosure during activation of the vacuum pump system.

According to the preferred embodiment the frame enclosure is further provided with UV-protected air vents configured to let an air to the frame enclosure, but block light from entering in to the frame enclosure.

According to yet another embodiment, the patching head further comprises a connecting element connected to the frame enclosure and configured to hold the frame enclosure in place and to allow the frame enclosure to maintain consistent contact with the wind turbine blade surface irrespective of the curvature of the blade surface. The connecting element further preferably comprise at least two hinged levers having ends one and two. The ends one of the hinged levers are designed to be located substantially under the frame enclosure; the connecting element being pivotally attached to the frame enclosure at a pivot point, located between the ends one and two of the hinged levers, so to adjust the hinged levers' angle relative to the frame enclosure during moving of the patching head along the varying curvature of the blade surface; wherein the ends one and two of the hinged levers are provided with a mechanism configured to move or glide across the blade surface without causing it damage. The mechanism configured to move or glide across the blade surface can be rollers, wheels, balls, sliders, skids, pads, tracks, gliders, casters arrangement.

According to yet another embodiment, the connecting element may comprise sequential hinged levers having ends one and two; the sequential hinged levers being pivotally attached to the hinged levers at a pivot point, located between the ends one and two of the sequential hinged levers, so to adjust the sequential hinged levers' angle relative to the hinged levers during moving of the patching head along the varying curvature of the blade surface; wherein the ends one and two of the sequential hinged levers are provided with a mechanism configured to move or glide across the blade surface without causing it damage.

### Brief description of the drawings

Fig. 1 - one embodiment of the toolbox adapted to store a patching head in a closable UV protective box, showing a robotic arm connecting patching head to a vacuum pump system;
Fig. 2 shows the patching head releasably fixed to the surface of a wind turbine blade by means of suction interface (in this embodiment - in the form of suction cups);
Fig. 3 shows one embodiment of the patching head ready to apply a patch with a UV curable adhesive to the surface of the blade;
Fig. 4 shows one embodiment of the frame enclosure with patch accommodated therein and closed by a UV protective curtain;
Fig. 5 shows one embodiment of the patching head with patch UV protective curtain holding arrangement and the UV protective curtain rolled-in;
Fig. 6 schematically shows a balancing system of a frame of the patching head.

### Detailed description of the invention

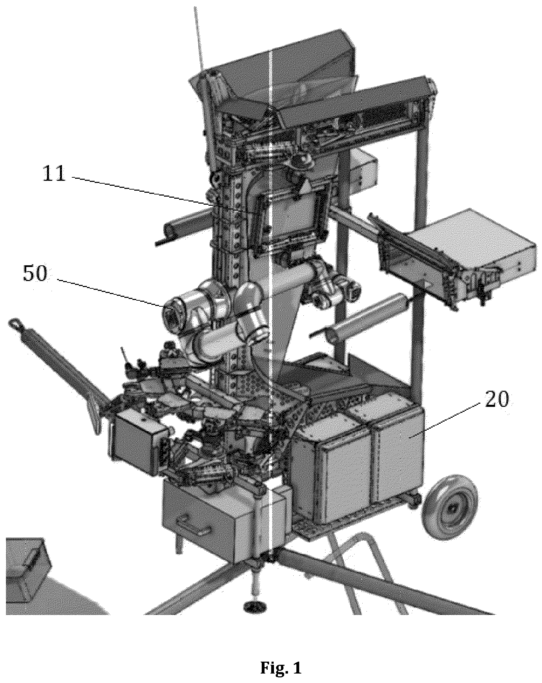

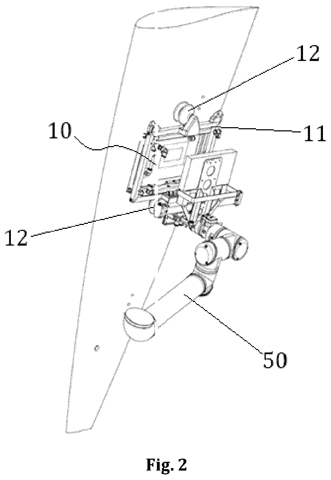

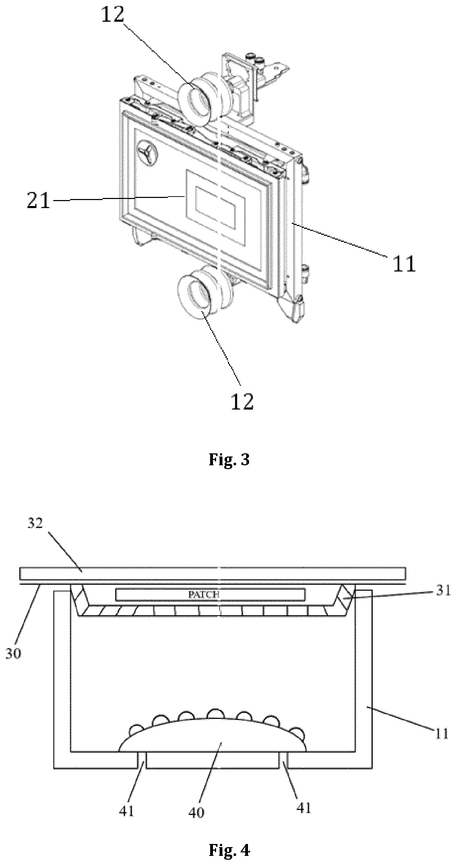

The claimed device for patching wind turbine blade surface comprises: a patching head 10, comprising: a frame enclosure 11 open on one side; the frame enclosure having a patch placement area 21; suction interface 12 (such as suction cups, vacuum pads, suction plates, suction channels in the frame, or equivalent means), configured to be applied to a surface of a wind turbine blade and to hold the frame enclosure 11 in the place, in respect to the blade; a curtain 30 with curtain holding arrangement 32; a UV light source 40 located in the frame enclosure 11 and configured to expose a patch placed on the patch placement area 21 to the UV light (Fig. 1-5). The device further comprises a pump system 20 pump system 20, connected to the suction interface 12 of the patching head 10; a robotic arm 50, designed to grip and position the patching head 10, to exert substantially perpendicular pressure onto the blade surface via the frame enclosure 11 during activation of the vacuum pump system 20.

The patch placement area 21 is designed to be in the form of a UV-transparent membrane 31, configured to be substantially flat at least in its center and have a border that extends outward ensuring a tight seal with the blade's surface when the vacuum pump system 20 is activated through the suction interface 12. According to one embodiment, the membrane 31 acts both as a holding means for the patch, and a vacuum sucker when applied to the blade (i.e. the suction interface 12 can be integrated into the membrane 31). The material of the membrane 31 (e.g. silicone) is flexible and transparent to the UV light spectrum.

The curtain 30 is designed to be UV-opaque and configured to be removably attached in front of the membrane 31, so to close open side of the frame enclosure 11 and to guard a patch from the ambient UV light exposure, when the patch is placed on the membrane 31. The curtain holding arrangement 32 is configured to allow remotely controllable removal of the curtain 30, so to remove the UV protection from the patch placed on the membrane 31. According to one embodiment the curtain holding arrangement 32 has a roller mechanism, where the curtain 30 is attached to a cylindrical rod or tube. When engaged, the curtain 30 is unrolled to cover the open side of the frame enclosure 11. There might be end stops or locking mechanism in place to ensure the curtain 30 stays in its desired position, whether fully unrolled, or fully retracted. When controllably disengaged, the curtain 30 rolls up onto this rod (for instance, located in a curtain storing compartment), retracting it from the open side. To ensure the curtain 30 rolls and unrolls smoothly without deviation, there may be guiding rails or channels on either side of the frame enclosure 11 that the edges of the curtain slide within.

To prevent pressure imbalances, and unintended movement of the membrane 31 as a result of differential air pressure, the frame enclosure 11 is preferably provided with UV-protected air vents 41 configured to let an air to the frame enclosure 11, but block light from entering in to the frame enclosure 11. These vents 41 may be configured to have baffled design (a series of baffles to create a zigzag pathway for air, blocking direct light paths); or be covered by a UV-protective mesh, designed to block UV light. The vents 41 may be positioned on the bottom or on a side of the frame enclosure 11, facing away from the primary light source. The vents 41 may be also provided by external shading, e.g. protruding over the vents 41.

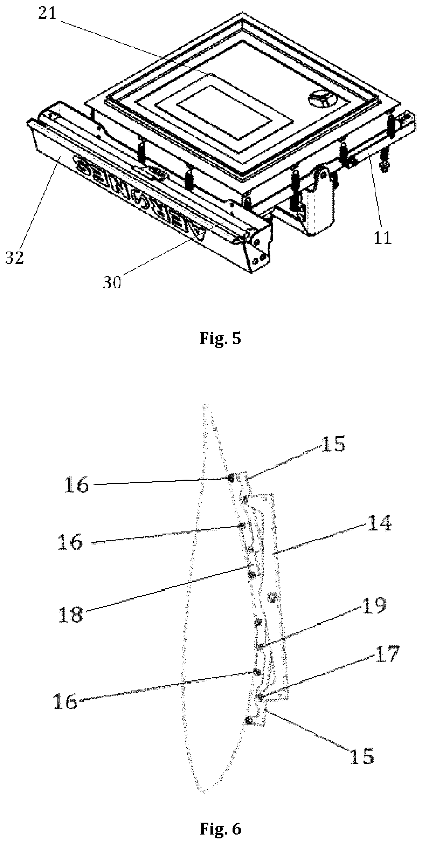

According to the preferred embodiment the patching head 10 further comprises a balancing system, adaptable to the curative of the blade's surface (Fig. 6). The balancing system, comprising a connecting element 14 connected to the frame enclosure 11 and configured to hold the frame enclosure 11 in place and to allow the frame enclosure 11 to maintain consistent contact with the wind turbine blade surface irrespective of the curvature of the blade surface. The connecting element 14 may comprise at least two hinged levers 15 having ends one and two; the ends one of the hinged levers 15 are designed to be located substantially under the frame enclosure 11; the connecting element 14 being pivotally attached to the frame enclosure 11 at a pivot point 17, located between the ends one and two of the hinged levers 15, so to adjust the hinged levers' 15 angle relative to the frame enclosure 11 during moving of the patching head 10 along the varying curvature of the blade surface; wherein the ends one and two of the hinged levers 15 are provided with a mechanism 16 configured to move or glide across the blade surface without causing it damage.

The connecting element 14 may comprise sequential hinged levers 18 having ends one and two. The sequential hinged levers 18 being pivotally attached to the hinged levers 15 at a pivot point 19, located between the ends one and two of the sequential hinged levers 18, so to adjust the sequential hinged levers' 18 angle relative to the hinged levers 15 during moving of the patching head 10 along the varying curvature of the blade surface; wherein the ends one and two of the sequential hinged levers 18 are provided with a mechanism 16 configured to move or glide across the blade surface without causing it damage. The mechanism 16 can be rollers', wheels', balls', sliders', skids', pads', tracks', gliders', or casters' arrangement.

The claimed device operates as follows. Before elevation of the device to the wind turbine blade's damaged area for patching wind turbine blade surface, the patch is prepared. A suitable patch is be selected. The patch can consist of multiple layers of pre-impregnated fabric. Multiple layers are to be prepared in advance to be held them together as a single patch and to be free of any air bubbles. Each size of multiple fabrics can be different to achieve scarfing. The patch can also have apertures, if necessary. The patch is be pre-impregnated with a UV-curable resin, is placed on the patch placement area 21. UV curable filler material (e.g. UV-curable epoxy resin, acrylic resin, urethane acrylate, polyester resin, gel coat, polyurethane, silicone resin, methacrylate adhesive, thiol-ene system) is applied on the membrane 31 around the edge of the patch to achieve a smooth edge transition when vacuum and UV are activated. Filler can also be applied to the back of the patch between the patch and the membrane 31 to achieve a smoother patch surface.

If desired, a sensor can be placed on or fixed to the patch to attach it to the wind turbine blade together with the patch. A sensor can be a planar electronic circuit board, which may or may not be integrated with a photovoltaic module. The sensor electronic circuit board is preferably encapsulated to avoid air, have smooth edges, and withstand mechanical vacuum application. If the sensor has a photovoltaic module, then the patch may be provided by an aperture, that matches the position of the sensor's photovoltaic module.

The UV light protective curtain 30 is removably attached to close open side of the frame enclosure 11 and to guard the patch from the ambient UV light exposure. Further the device is brought up to the wind turbine blade to be repaired. The robotic arm 50 positions the patching head 10 over the damaged area of the wind turbine blade, ensuring that the patch placement area 21 directly aligns with the damage on the wind turbine blade surface. Initially, the robotic arm 50 ensures the patching head 10 hovers just above the desired blade surface position without making contact. After removing the curtain 30, the arm 50 advances the patching head 10 perpendicularly until the patch touches the blade surface. Furthermore, the arm 50 exerts perpendicular pressure onto the blade during vacuum activation to assist with optimal sealing. Once the patching head 10 is properly positioned, the suction interface 12 are activated, creating a vacuum seal against the blade's surface. The vacuum pump system 20 ensures that the patching head 10 firmly adheres to the blade's surface, preventing any movement or slippage.

The design of the membrane 31 ensures that the outer edges of the membrane 31 create a tight seal against the blade's surface. The membrane's 31 substantial flatness in the center ensures a consistent pressure and fit over the patch, which aids in the effective bonding of the patch to the surface to be patched.

The UV light source 40 is activated, emitting UV rays onto the patch. This causes the UV-curable resin within the patch to harden and adhere to the blade's surface. The duration and intensity of the UV exposure would depend on the specific resin being used and the extent of the damage. After curing, the robotic arm 50 retracts the patching head 10 from the blade's surface. The patch should now be securely bonded to the blade's surface. A final inspection is preferably carried out to ensure that the patch has been properly applied and that there are no imperfections or bubbles trapped underneath. Further the negative pressure established by the pump system 20 is alleviated, and the patching head 10 can be moved to another location if there are multiple damages on the blade.

## Claims

1. A device for patching wind turbine blade surface comprising:
- a patching head (10), comprising: a frame enclosure (11) open on one side; the frame enclosure having a patch placement area (21); a suction interface (12), configured to be applied to a surface of a wind turbine blade and to hold the frame enclosure (11) in the place, in respect to the blade; a curtain (30) with curtain holding arrangement (32); a UV light source (40) located in the frame enclosure (11) and configured to expose a patch placed on the patch placement area (21) to the UV light;
- a pump system (20), connected to the suction interface (12) of the patching head (10);
- a robotic arm (50), designed to grip and position the patching head (10), to exert substantially perpendicular pressure onto the blade surface via the frame enclosure (11) during activation of the vacuum pump system (20);
wherein the patch placement area (21) is designed to be in the form of a UV-transparent membrane (31), configured to be substantially flat at least in its center and have a border that extends outward ensuring a tight seal with the blade's surface when the vacuum pump system (20) is activated through the suction interface (12);
the curtain (30) is designed to be UV - opaque and configured to be removably attached in front of the membrane (31), so to close open side of the frame enclosure (11) and to guard a patch from the ambient UV light exposure, when the patch is placed on the membrane (31); wherein the curtain holding arrangement (32) is configured to allow remotely controllable removal of the curtain (30), so to remove the UV protection from the patch placed on the membrane (31).

2. The device according to claim 1, wherein the frame enclosure (11) is provided with UV-protected air vents (41) configured to let an air to the frame enclosure (11), but block light from entering in to the frame enclosure (11).

3. The device according to any preceding claims, wherein the suction interface (12) is integrated into the membrane (31).

4. The device according to any preceding claims, wherein the patching head (10) further comprises a connecting element (14) connected to the frame enclosure (11) and configured to hold the frame enclosure (11) in place and to allow the frame enclosure (11) to maintain consistent contact with the wind turbine blade surface irrespective of the curvature of the blade surface.

5. The device according to claim 4, wherein the connecting element (14) comprises at least two hinged levers (15) having ends one and two; the ends one of the hinged levers (15) are designed to be located substantially under the frame enclosure (11); the connecting element (14) being pivotally attached to the frame enclosure (11) at a pivot point (17), located between the ends one and two of the hinged levers (15), so to adjust the hinged levers' (15) angle relative to the frame enclosure (11) during moving of the patching head (10) along the varying curvature of the blade surface; wherein the ends one and two of the hinged levers (15) are provided with a mechanism (16) configured to move or glide across the blade surface without causing it damage.

6. The device according to claim 5, wherein the connecting element (14) comprise sequential hinged levers (18) having ends one and two; the sequential hinged levers (18) being pivotally attached to the hinged levers (15) at a pivot point (19), located between the ends one and two of the sequential hinged levers (18), so to adjust the sequential hinged levers' (18) angle relative to the hinged levers (15) during moving of the patching head (10) along the varying curvature of the blade surface; wherein the ends one and two of the sequential hinged levers (18) are provided with a mechanism (16) configured to move or glide across the blade surface without causing it damage.

7. The device according to claim 5 or 6, wherein the mechanism (16) configured to move or glide across the blade surface is selected from the group consisting of rollers, wheels, balls, sliders, skids, pads, tracks, gliders and casters.

## Patentansprüche

1. Reparaturgerät für die Oberfläche von Windrad-Rotorblättern, bestehend aus:
- Einem Reparaturkopf (10), der aus einem einseitig offenen Rahmenumschließung (11) besteht. Die Rahmenumschließung weist dabei einen Reparatur-Platzierungsbereich (21) auf; eine Saugfläche (12), die so beschaffen ist, dass sie an einer Oberfläche eines Windrad-Rotorblatts angebracht werden kann und die Rahmenumschließung (11) relativ zum Rotorblatt an Ort und Stelle hält; einen Vorhang (30) mit einer Vorhanghaltevorrichtung (32); eine UV-Lichtquelle (40), die sich in der Rahmenumschließung (11) befindet und so beschaffen ist, dass sie ein auf dem Reparatur-Platzierungsbereich (21) platziertes Flickwerk dem UV-Licht aussetzt;
- Einem Pumpensystem (20), das mit der Saugfläche (12) des Reparaturkopfes (10) verbunden ist;
- Einem Roboterarm (50), der dazu ausgelegt ist, den Reparaturkopf (10) zu greifen und zu positionieren, um während der Aktivierung des Vakuumpumpensystems (20) über die Rahmenumschließung (11) einen im Wesentlichen senkrechten Druck auf die Oberfläche des Rotorblatts auszuüben. Der Platzierungsbereich (21) für das Flickwerk ist dabei in Form einer UVdurchlässigen Membran (31) konzipiert und so beschaffen, dass sie zumindest in ihrer Mitte im Wesentlichen flach ist und einen Rand aufweist, der sich nach außen erstreckt, um eine enge Abdichtung mit der Oberfläche des Rotorblatts zu gewährleisten, wenn das Vakuumpumpensystem (20) über die Saugfläche (12) aktiviert wird;
Der Vorhang (30) ist so konzipiert, dass er UV-undurchlässig ist und abnehmbar vor der Membran (31) angebracht werden kann, um die offene Seite der Rahmenumschließung (11) zu verschließen und ein Flickwerk vor der Einwirkung von UV-Licht aus der Umgebung zu schützen, wenn dieses auf der Membran (31) aufgetragen wird. Die Vorhanghaltevorrichtung (32) ist dafür ausgelegt, den Vorhang (30) ferngesteuert einzufahren, um den UV-Schutz von dem auf der Membran (31) angebrachten Flickwerk zu entfernen.

2. Gerät gemäß nach Patentanspruch 1, wobei die Rahmenumschließung (11) mit UV-geschützten Lüftungsöffnungen (41) versehen ist, die Luft in die Rahmenumschließung (11) lassen, aber das Eindringen von Licht in die Rahmenumschließung (11) verhindern.

3. Gerät gemäß einem der vorstehenden Patentansprüche, wobei die Saugfläche (12) in die Membran (31) integriert ist.

4. Gerät gemäß einem der vorstehenden Patentansprüche, wobei der Reparaturkopf (10) ferner ein Verbindungselement (14) umfasst, das mit der Rahmenumschließung (11) verbunden und dafür ausgelegt ist, dass es die Rahmenumschließung (11) an Ort und Stelle hält und es ihr ermöglicht, unabhängig von der Krümmung der Oberfläche des Windrad-Rotorblatts einen gleichmäßigen Kontakt mit ihr aufrechtzuerhalten.

5. Gerät gemäß Patentanspruch 4, wobei das Verbindungselement (14) mindestens zwei Gelenkhebel (15) mit Enden "eins" und "zwei" umfasst. Die Enden "eins" der Gelenkhebel (15) sind im Wesentlichen unter der Rahmenumschließung (11) angeordnet. Das Verbindungselement (14) ist an einem Drehpunkt (17), der sich zwischen dem ersten und dem zweiten Ende der Gelenkhebel (15) befindet, schwenkbar an der Rahmenumschließung (11) befestigt, um den Winkel der Gelenkhebel (15) relativ zur Rahmenumschließung (11) während der Bewegung des Reparaturkopfes (10) entlang der variierenden Krümmung der Rotorblattoberfläche einzustellen. Die Enden "eins" und "zwei" der Gelenkhebel (15) sind mit einem Mechanismus (16) versehen, der dafür ausgelegt ist, sich über die Rotorblattoberfläche zu bewegen oder zu gleiten, ohne diese zu beschädigen.

6. Gerät gemäß Patentanspruch 5, wobei das Verbindungselement (14) aufeinanderfolgende Gelenkhebel (18) mit Enden "eins" und "zwei". Die aufeinanderfolgenden Gelenkhebel (18) sind an einem Drehpunkt (19), der sich zwischen dem ersten und dem zweiten Ende der aufeinanderfolgenden Gelenkhebel (18) befindet, schwenkbar an den Gelenkhebeln (15) angebracht, um den Winkel der aufeinanderfolgenden Gelenkhebel (18) relativ zu den Gelenkhebeln (15) während der Bewegung des Reparaturkopfes (10) entlang der variierenden Krümmung der Rotorblattoberfläche einzustellen. Die Enden "eins" und "zwei" der aufeinanderfolgenden Gelenkhebel (18) sind dabei mit einem Mechanismus (16) versehen, der dafür ausgelegt ist, sich über die Rotorblattoberfläche zu bewegen oder zu gleiten, ohne diese zu beschädigen.

7. Gerät gemäß Patentanspruch 5 oder 6, wobei der Mechanismus (16), der dafür ausgelegt ist, sich über die Rotorblattoberfläche zu bewegen oder zu gleiten, aus der Gruppe ausgewählt ist, die aus Rollen, Rädern, Kugeln, Gleitern, Kufen, Polstern, Ketten, Gleitern und Lenkrollen besteht.

## Revendications

1. Dispositif permettant d'appliquer un patch sur une surface de pale de turbine éolienne comprenant :
- une tête d'application de patch (10), comprenant : une enceinte à cadre (11) ouverte sur un côté ; l'enceinte à cadre ayant une zone de mise en place de patch (21) ; une interface d'aspiration (12), conçue pour être appliquée à une surface d'une pale de turbine éolienne et pour maintenir l'enceinte à cadre (11) dans la place, par rapport à la pale ; un rideau (30) avec un agencement de maintien de rideau (32) ; une source de lumière UV (40) localisée dans l'enceinte à cadre (11) et configurée pour exposer un patch placé sur la zone de mise en place de patch (21) à la lumière UV ;
- un système de pompe (20), relié à l'interface d'aspiration (12) de la tête d'application de patch (10) ;
- un bras robotique (50), destiné à saisir et positionner la tête d'application de patch (10), pour exercer une pression sensiblement perpendiculaire sur la surface de pale par l'intermédiaire de l'enceinte à cadre (11) pendant une activation du système de pompe à vide (20) ;
dans lequel la zone de mise en place de patch (21) est destinée à être sous la forme d'une membrane transparente aux UV (31), conçue pour être sensiblement plate au moins dans son centre et avoir une bordure qui s'étend vers l'extérieur assurant un scellement étanche avec la surface de la pale lorsque le système de pompe à vide (20) est activé par le biais de l'interface d'aspiration (12) ;
le rideau (30) est destiné à être opaque aux UV et conçu pour être fixé de manière amovible devant la membrane (31), de façon à fermer un côté ouvert de l'enceinte à cadre (11) et à protéger un patch d'une exposition à la lumière UV ambiante, lorsque le patch est placé sur la membrane (31) ; dans lequel l'agencement de maintien de rideau (32) est conçu pour permettre un retrait pouvant être commandé à distance du rideau (30), de façon à retirer une protection contre les UV du patch placé sur la membrane (31).

2. Dispositif selon la revendication 1, dans lequel l'enceinte à cadre (11) est pourvue d'évents d'air (41) protégés des UV conçus pour laisser entrer l'air vers l'enceinte à cadre (11), mais empêcher la lumière d'entrer dans l'enceinte à cadre (11).

3. Dispositif selon de quelconques revendications précédentes, dans lequel l'interface d'aspiration (12) est intégrée dans la membrane (31).

4. Dispositif selon de quelconques revendications précédentes, dans lequel la tête d'application de patch (10) comprend en outre un élément de liaison (14) relié à l'enceinte à cadre (11) et conçu pour tenir l'enceinte à cadre (11) en place et pour permettre à l'enceinte à cadre (11) de maintenir un contact constant avec la surface de pale de turbine éolienne indépendamment de la courbure de la surface de pale.

5. Dispositif selon la revendication 4, dans lequel l'élément de liaison (14) comprend au moins deux leviers articulés (15) ayant des extrémités un et deux ; les extrémités un des leviers articulés (15) sont destinées à être localisées sensiblement sous l'enceinte à cadre (11) ; l'élément de liaison (14) étant fixé de manière pivotante à l'enceinte à cadre (11) au niveau d'un point de pivot (17), localisé entre les extrémités un et deux des leviers articulés (15), de façon à ajuster l'angle des leviers articulés (15) par rapport à l'enceinte à cadre (11) pendant un déplacement de la tête d'application de patch (10) le long de la courbure variable de la surface de pale ; dans lequel les extrémités un et deux des leviers articulés (15) sont pourvues d'un mécanisme (16) conçu pour se déplacer ou glisser à travers la surface de pale sans lui amener de dommage.

6. Dispositif selon la revendication 5, dans lequel l'élément de liaison (14) comprend des leviers articulés séquentiels (18) ayant des extrémités un et deux ; les leviers articulés séquentiels (18) étant fixés de manière pivotante aux leviers articulés (15) au niveau d'un point de pivot (19), localisé entre les extrémités un et deux des leviers articulés séquentiels (18), de façon à ajuster l'angle des leviers articulés séquentiels (18) par rapport aux leviers articulés (15) pendant un déplacement de la tête d'application de patch (10) le long de la courbure variable de la surface de pale ; dans lequel les extrémités un et deux des leviers articulés séquentiels (18) sont pourvues d'un mécanisme (16) conçu pour se déplacer ou glisser à travers la surface de pale sans lui amener de dommage.

7. Dispositif selon la revendication 5 ou 6, dans lequel le mécanisme (16) conçu pour se déplacer ou glisser à travers la surface de pale est choisi dans le groupe constitué de rouleaux, roues, billes, glissières, semelles, coussinets, rails, patins et roulettes.
